# EUROPEAN PATENT SPECIFICATION

(11) **EP 3 387 635 B1**
(45) Date of publication and mention of the grant of the patent: **12.02.2020**
(21) Application number: 16810340.6
(22) Date of filing: 12.12.2016
(51) Int. Cl.: G09B 23/28

(54) **DEVICE FOR SIMULATING AN ENDOSCOPIC OPERATION VIA NATURAL ORIFICE**
VORRICHTUNG ZUR SIMULATION EINER ENDOSKOPISCHEN OPERATION ÜBER EINE NATÜRLICHE ÖFFNUNG
DISPOSITIF PERMETTANT DE SIMULER UNE OPÉRATION ENDOSCOPIQUE PAR L'INTERMÉDIAIRE D'UN ORIFICE NATUREL

(30) Priority: 11.12.2015 ES 201531796
(43) Date of publication of application: 17.10.2018
(73) Proprietor: Fundació Institut de Recerca de l'Hospital de la Santa Creu I Sant Pau, 08025 Barcelona (ES); Universitat Politècnica De Catalunya, 08034 Barcelona (ES); Fundació Institut de Bioenginyeria de Catalunya (IBEC), 08028 Barcelona (ES)
(72) Inventor: CASALS GELPÍ, Alicia, 08034 Barcelona (ES); HERNANSANZ PRATS, Albert, 08034 Barcelona (ES); ROVIRA NEGRE, Ramón, 08025 Barcelona (ES); BASOMBA FELIU, Joan, 08820 El Prat de Llobregat (Barcelona) (ES); COMAS PÉREZ, Roger, 08034 Barcelona (ES)
(74) Representative: ZBM Patents - Zea, Barlocci & Markvardsen
(86) International application number: PCT/EP2016/080572
(87) International publication number: WO 2017/098036

(56) References cited:
- WO-A1-99/38141
- WO-A2-2007/149519
- DE-A1- 2 817 548
- ES-A1- 2 534 140
- US-A1- 2006 232 664
- US-A1- 2009 263 775

## Description

The present invention relates to a device for simulating an endoscopic operation via natural orifice.

### BACKGROUND ART

Endoscopy may be defined as a diagnostic and/or surgical technique, of minimally invasive surgery branch, which involves the introduction of a camera or lens arranged in a tube or endoscope through a natural orifice or a surgical incision (normally performed in the abdominal wall) for viewing a hollow organ or body cavity. The endoscope may further comprise one or more surgical elements (e.g. tweezers) which allow surgical interventions in the accessed organ or accessed body cavity. There exist obvious differences between endoscopic techniques via natural orifice and endoscopic techniques via surgical incision, such as, for example, the type of tools, access paths and surgical fields that are accessed. Therefore, these different techniques may generate different scenarios and therefore require overcoming different difficulties. Laparoscopy is an example of endoscopy via surgical incision, which is typically performed in the abdominal wall. Hysteroscopy and cystoscopy are examples of endoscopy via natural orifice. In the case of hysteroscopy the access is performed vaginally, while in cystoscopy the access is performed via urinary tract. Devices that allow physical simulation of laparoscopic operations are known. For example, Spanish patent application ES 2534140 A1 describes a device for learning and training laparoscopic surgery operations.

Taking into account the differences between endoscopic techniques via natural orifice and laparoscopic techniques, these (prior art) devices for laparoscopic simulation are not valid for the simulation of endoscopies via natural orifice. The type and number of tools may be different for every type of endoscopy, as well as the access paths and the surgical field.

### SUMMARY

Therefore, there is a need for new devices for simulating an endoscopic operation via natural orifice as defined in independent claim 1.

In a first aspect, a device is provided for simulating an endoscopic operation via natural orifice, comprising a physical model of a biological organ. The physical model of the biological organ comprises a main module (or piece) and an inlet module (or piece) that are detachable (i.e. independent) from each other. The main module defines a main body of the organ with a cavity and the inlet module defines an inlet opening to the cavity of the main module corresponding to the inlet of the biological organ.

The main module and inlet module may be attachable to each other through a coupling and decoupling system of easy execution. For example, the coupling system may be a snap system, so that a simple "click" may be sufficient to assemble such modules.

The cavity of the main module is accessible through the inlet module by an endoscopic tool for acting in the cavity of the main module. The main module is configured in such a way that, in use, one or more simulation modules (or pieces) are attachable with the main module for simulating one or more events representative of the actuation by the endoscopic tool in the cavity of the main module.

In some examples, the endoscopic simulation device may further comprise the endoscopic tool and the simulation module or modules. The endoscopic tool may be configured to access the cavity of the main module through the inlet module and to actuate in the cavity of the main module. The simulation modules may be attachable with the main module and may be configured to simulate one or more events representative of the actuation of the endoscopic tool in the cavity of the main module.

The main module may comprise one or more simulation modules integrated therein, so that the electronics associated with such simulation modules may be, insofar as possible, a common or shared electronics. In the case of attachable (or removable) simulation modules, the electronics associated with such modules may not be shared, but every module may individually incorporate the necessary electronics for its proper operation.

One aspect of the proposed device is that it may allow the simulation of endoscopic operations via natural orifice with versatility and realism. In particular, with this device, a large variety of biological organs with different morphologies and/or pathologies may be simulated in a relatively simple way. The replacement of the main module or the inlet module of the physical model of the biological organ by another different main or inlet module may allow the simulation of a different biological organ or with different morphologies and/or pathologies. The presence of more or less simulation modules (coupled or integrated with the main module) and/or with different shapes may allow the simulation of organs with diverse pathologies.

A main module, an inlet module and one or more simulation modules may be generated according to a specific morphology of an organ of a particular patient. This morphology, which may also include a specific pathology, may be determined from medical images obtained for this purpose. The main, inlet and simulation modules may be produced (or manufactured) through, for example, a 3D (three-dimensional) printing according to such medical images.

In a case of example, a series of medical imaging tests, such as x-rays, ultrasounds, Computed Tomography, etc. performed to a patient may anticipate some difficulty of a hypothetical endoscopic operation (via natural orifice) to be performed to the patient. Under these circumstances, a proper combination of certain main, inlet and simulation modules of the proposed device may allow a simulation of an organ and pathology very close to reality, according to the performed imaging tests. With this, the endoscopic operation may be simulated as many times as deemed necessary in order to ensure, as far as possible, the overcoming of the anticipated difficulties.

The disclosed device may permit transitioning from one scenario to another in a relatively quick and easy way. A simple substitution of one or more of the (main, inlet and simulation) modules of the device may allow the simulation of an organ and/or pathology completely different from the previous organ and/or pathology. For example, a simulation module with a specific size and shape and placed in a particular position of the main module (of the physical model of the biological organ) may simulate a pathology completely different from the previous one and very close to reality.

In some examples, the main module of the physical model of the biological organ may comprise at least one coupling opening configured in such a way that one of the simulation modules is attachable to said coupling opening. The main module may have as many coupling openings as deemed necessary to simulate a wide range of, for example, tumor pathologies. The coupling openings may be located so as to simulate the vast majority of known pathologies (according to, for example, historical data) by coupling simulation modules with suitable shape and size.

The coupling of the simulation module to the coupling opening may be, for example, a snap coupling. This feature may allow a quick and easy transition between different "pathological" scenarios with a simple "click" of a simulation module in a coupling opening selected according to the pathology to be simulated.

In some configurations, the device may further comprise a physical model of an access path to the physical model of the biological organ from the outside. Such a physical model of the access path may be detachable with respect to the physical model of the biological organ. The access path may be, for example, a penis or vagina and its associated urinary tract, an anus and its associated rectum, etc. Thus, a very suitable scenario may be simulated for simulating an endoscopic operation (via natural orifice) under very specific conditions and, therefore, very close to reality. When the physical model of the access path models a vagina, the physical model of the associated biological organ may correspond to a uterus accessible through said vagina, for example.

The physical model of the biological organ and the physical model of the inlet path may be attachable to each other through a coupling and decoupling system of easy execution. For example, said coupling system may be a snap system, so that a simple "click" may be sufficient to assemble such physical models.

In implementations of the device, one of the simulation modules may comprise a physical model of a tumor or polyp (or set of them) configured in such a way that, in use, it is removable by the endoscopic tool. This simulation module may also comprise a sensor configured to detect the removal of the tumor or polyp through the endoscopic tool. Therefore, it is possible to simulate a complete endoscopic operation (via natural orifice) including diagnosis and removal of a tumor or polyp, along with the generation of data about the extraction from signals generated by the sensor associated with the simulated tumor or polyp. These data/signals may allow, for example, determining whether the endoscopic tool has been correctly or incorrectly operated by an operator (user, student, surgeon, etc.) to remove the tumor or polyp, among others.

In some examples, one of the simulation modules may comprise a physical model of a biological organ tissue configured in such a way that, in use, it is removable by the endoscopic tool. This simulation module may also comprise a sensor configured to detect the removal (and previous resection) of the biological organ tissue through the endoscopic tool. With these features, it is possible to simulate a complete endoscopic operation including diagnosis and extraction of a biological tissue, together with the possibility of generating data about the extraction (and previous resection) obtained from signals generated by the sensor associated with the simulated tissue. This data may allow the determination of whether the endoscopic tool has been correctly or incorrectly operated by an operator (or user, student, surgeon, etc.).

In configurations of the device, at least part of an inner surface of the cavity of the main module of the physical model of the biological organ may be coated with a sensing layer (or sensor-equipped mesh). This sensing layer may be configured to detect a pressure exerted by the endoscopic tool. The presence of the sensing layer may allow performing simulations with a greater degree of realism. It may also offer the possibility to evaluate more rigorously whether the endoscopic tool has been used correctly or incorrectly by a user (or operator, student, surgeon, etc.).

If, for example, the sensor detects that the endoscopic tool comes into contact with a surface of the simulated organ which does not have to be touched, data indicative of bad operation of the endoscopic tool may be generated. The sensor may also detect the intensity of the contact so as to generate data representative of the magnitude of the bad operation (or, in general, of the quality of use) of the endoscopic tool.

In some implementations, at least part of an inner surface of the cavity of the main module of the physical model of the biological organ may be coated with a layer of soft material. This soft material may simulate one or more properties of a biological organ tissue, so that more realistic simulation scenarios may be provided.

In some examples, the inlet module of the physical model of the biological organ may be configured in such a way that, in use, it provides a pivot point for the endoscopic tool. The inlet module may, therefore, have a suitable size and morphology to provide a pivot point very close to reality according to, for example, imaging tests previously performed to the patient. As many endoscopic operations as deemed necessary may be simulated in order to ensure good chance of success of the real endoscopy.

In implementations of the provided device, the inlet module of the physical model of the biological organ may comprise a sensor for detecting the passage and/or the presence of the endoscopic tool through the inlet opening of the inlet module. This sensor may generate signals indicative of whether the passage of the endoscopic tool through the inlet of the organ is correct or incorrect. The sensor may detect the intensity of the contact between the endoscope and the inlet to the organ in order to estimate to what extent the passage of the endoscope is incorrect. The signals generated by the sensor may be used to produce data representative of the quality of use of the endoscopic tool by an operator (or user, student, surgeon, etc.) during the endoscopic simulation.

In some configurations, the device may comprise one or more sensors coupled to the endoscopic tool configured to detect the position and/or orientation of the endoscopic tool. The position and/or orientation may be continuously detected and evaluated to determine the quality of use of the endoscopic tool by a user (or operator, student, surgeon, etc.). For this purpose, predefined position/orientation margins depending on the scenario and the type of simulated endoscopy may be taken into account.

If the position and/or orientation of the endoscope evolve substantially within the predefined margins, an output indicative of proper operation of the endoscope may be generated. If, however, the position and/or orientation exceed the predefined margins for at least part of the simulation, the operation of the endoscope may be considered incorrect. In short, a magnitude of the quality of use (correct or incorrect) of the endoscope or endoscopic tool may be derived, depending on the time of execution, economy of motion, proximity to critical regions, etc. Parameters such as the economy of motion and the proximity to critical regions may be determined depending on, for example, whether the position and/or orientation are outside (or inside) margins and to what extent during the simulation.

In some examples, the device may comprise one or more video recording devices configured for recording different aspects of the endoscopic operation. For example, these devices may perform the function of recording a user of the endoscopic tool, and/or the endoscopic tool itself, and/or an inside of the physical model of the biological organ, etc. during the simulation of the endoscopic operation (via natural orifice).

The recording of the user (or operator, student, surgeon, etc.) during the simulation of the endoscopic operation may be reviewed a posteriori by, for example, the user and/or a mentor (or professor). This review may have the aim of performing, for example, an analysis of the ergonomics and position of the user in order to correct and improve the ergonomics of the trunk and upper limbs of the user.

The recording of the endoscopic tool may be useful for, for example, determining the position and/or orientation of the tool in order to implement the functions described in this respect in other parts of the description. The recording of the inside of the physical model of the biological organ may be useful to analyze certain details of the simulated endoscopic operation which may only be captured inside the organ, in positions close to the simulated pathology.

In some configurations, the proposed device may comprise a haptic system coupled to the endoscopic tool for transmitting haptic information to a user of the endoscopic tool during the simulation of the endoscopic operation.

The device may generate, during the simulation of the endoscopic operation (via natural orifice) a haptic return that allows informing the student (or user, operator, surgeon, etc.) in real time about the quality of the exercise (or simulation) that is being performed. This haptic return may be performed through signals relating to various sensory channels selected from one or more channels of audio, video, variable frequency strength depending on the quality of execution of the exercise, etc. The haptic communication may be performed by, for example, producing vibrations to generate information on the state of the execution of the exercise. The vibration, which may be transmitted through the endoscopic tool to the hand of the user, may vary in frequency and intensity according to certain parameters (for example, the distance between the tool and a target point of the simulation).

The device may comprise, for example, a control unit that may be a computing system connected to at least one of the components (e.g. sensors, cameras, etc.) of the device. The computing system may be configured to execute a computer program for controlling the device, collecting and monitoring input and output signals of the sensors, cameras, etc. This computer program may allow managing all the information relating to operators (or users, students, surgeons, etc.), execution of simulations, evaluation of results, etc. Also, the control unit may be able to manage a network connection for remote storage, for example.

The control unit may also allow maintaining a local or remote database. This database may store required data (e.g. haptic feedback data), and may allow the retrieval and analysis of data on the performed simulations. The recording and analysis of the data may be performed by said computer program executed by the computing system. Statistical data related to the simulations may be generated from the database, for example.

### BRIEF DESCRIPTION OF THE DRAWINGS

Particular embodiments of the present invention will be described by way of nonlimiting examples with reference to the accompanying drawings, in which:
Figure 1 shows a schematic graphical representation of a physical model of a biological organ and a physical model of an access path suitable for examples of a device for simulating an endoscopic operation.
Figure 2 shows a schematic graphical representation of an example of a device for simulating an endoscopic operation.

### DETAILED DESCRIPTION OF EMBODIMENTS

In the following, numerous specific details of the invention will be described in order to provide a thorough understanding thereof. However, a skilled person in the art should understand that the present invention may be performed without some or all of these specific details. Moreover, certain well-known elements have not been described in detail in order to not unnecessarily complicate the description of the present invention.

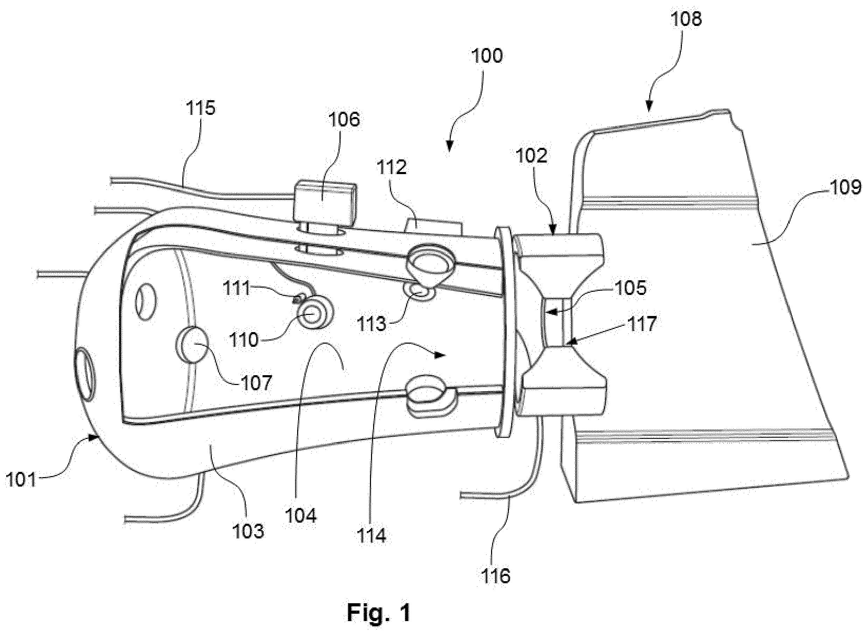

Figure 1 shows a schematic graphical representation of a physical model of a biological organ 100 and a physical model of an access path 108 suitable for examples of a device for simulating an endoscopic operation (via natural orifice). The physical model of the biological organ 100 may comprise a main module 101 and an inlet module 102 detachable from each other. The main module 101 may define a main body of the organ 103 with a cavity 104. The inlet module 102 may define an inlet opening 105 to the cavity 104 of the main module 101 corresponding to the inlet of the simulated biological organ.

The main module 101 may comprise coupling openings 107 that are configured to receive a simulation module 106 through, for example, a snap coupling. One of the coupling openings may be adapted for the coupling of a simulation module 106 comprising a physical model of a tumor or polyp 110. This simulation module 106 may further comprise a sensor 111 configured to detect the removal of the tumor (or polyp) 110 by an endoscopic tool (not shown).

One of the coupling openings may be configured for the coupling of a simulation module 112 comprising a physical model of a biological tissue 113, and a sensor (not shown) to detect the removal (and previous resection) of the tissue 113 through the endoscopic tool.

An inner surface 114 of the cavity 104 of the main module 101 may be coated with a layer of soft material, or with a sensing layer, or with both types of layers. The layer of soft material may simulate some property of a biological organ tissue to provide a more realistic simulation of the biological organ and the endoscopic operation.

The physical model of the access path 108 may be detachable from the physical model of the biological organ 100, and may comprise an opening 109 representing a natural opening of a human body. For example, the physical model of the biological organ 100 may simulate a rectum intestine, and the physical model of the access path 108 may simulate an anus associated with the rectum intestine.

The opening 105 of the inlet module 102 may be configured in such a way that, in use, it provides a pivot point 117 for the endoscopic tool during the endoscopic operation. The pivot point 117 may have ones or others properties depending on the type of organ represented (or simulated) and the particular patient to whom the simulated organ belongs.

The inlet module 102 and, in general, any of the modules constituting the simulated organ and the simulated access path, may be designed from imaging tests performed to a particular patient. Thus, various endoscopic operation tests may be performed prior to proceed to the real endoscopy, in order to largely ensure success of the real endoscopic operation.

The inlet module 102 may comprise one or more sensors (not shown) configured to detect the passage/presence of the endoscopic tool through the opening 105. At least part of these sensors may be pressure sensors configured to detect how the endoscopic tool pivots on the pivot point 117. The sensors of the inlet module 102 may be connected to a control unit (not shown) through suitable cables 116 (or, alternatively, through wireless connection). Thus, the control unit may receive signals from the sensors in order to process them and generate data representative of the quality of execution of at least part of the endoscopic operation (via natural orifice).

The simulation modules 106, 110, 112 and associated sensors 111 may also be connected to the control unit through corresponding cables 115 (or, alternatively, through wireless connection). The sensors 111 may generate and send detection signals to the control unit through said cables 115 (or wireless connection). The control unit may generate data of the performed simulation by processing the received signals. For example, one or more pressure sensors comprised in the inside 104 of the main module 101 may generate signals relating to the contact between the endoscopic tool and the main module 101. The control unit may receive said signals and generate data indicative of how the endoscopy has been performed from said received signals.

These signals may, for example, indicate the specific surface(s) on which the contact occurs, quantify the intensity of the contact, etc. From these signals, the control unit may generate data on, for example, whether the endoscopic tool has passed correctly through the inlet 105 or, on the contrary, has been inserted incorrectly. The signals representative of the intensity of the contact may allow the control unit to generate data on, for example, possible damages caused by an incorrect insertion of the endoscopic tool.

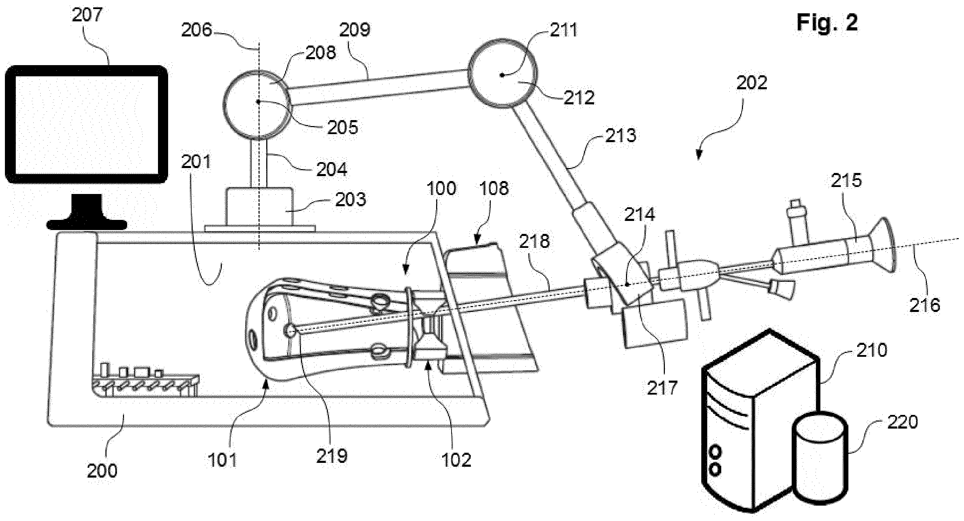

Figure 2 shows a schematic graphical representation of an example of a device for simulating an endoscopic operation (via natural orifice). The endoscopic simulation device may comprise a physical model of a biological organ 100 having a main module 101 and an inlet module 102, and a physical model of an access path 108. These physical models of the biological organ 100 and the access path 108 may be equal or similar to those of Figure 1, for example.

The endoscopic simulation device may also comprise a casing 200 configured to house in its inside 201 at least the physical model of the biological organ 100, and simulation modules (not shown) equal or similar to those described in relation to Figure 1.

The endoscopic simulation device may further comprise an endoscopic tool 202 which may have an articulated arm, a handle 215 and an endoscopic tube 218 for accessing the inside of the main module 101 of the physical model of the biological organ 100.

The articulated arm may comprise a support base 203 on the protective casing 200, and a first bar 204, second bar 209 and third bar 213 articulated to each other. The first bar 204 may be disposed vertically and may be rotatable around a vertical rotation axis 206. The vertical rotation axis 206 may be a longitudinal axis of the first bar 204.

The first and second bars 204, 209 may be connected through a first ball and socket joint 208. This first ball and socket joint 208 may be configured in such a way that the second bar 209 is movable with respect to the first bar 204 in a rotatory manner around a first horizontal rotation axis 205.

The second and third bars 209, 213 may be connected through a second ball and socket joint 212. This second ball and socket joint 212 may be configured in such a way that the third bar 213 is movable with respect to the second bar 209 in a rotatory manner around a second horizontal rotation axis 211.

The third bar 213 and the endoscopic tube 218 may be connected through a third ball and socket joint 217 configured in such a way that the endoscopic tube 218 is movable with respect to the third bar 213. This movement of the endoscopic tube 218 may be a rotary movement around a third horizontal rotation axis 214.

The rotatory connections between the base 203 and the first bar 204, between the first bar 204 and the second bar 209, between the second bar 209 and the third bar 213, and between the endoscopic tube 218 and the third bar 213 may comprise a rotation sensor. These rotation sensors may generate signals from which the position and orientation of the endoscopic tool and, in particular, the endoscopic tube 218 may be monitored in a very accurate manner.

The endoscopic tube 218 may comprise a tip 219 of the tube, a camera for viewing the explored region of the physical model of the biological organ 100. The tip 219 of the endoscopic tube 218 may further comprise one or more surgical elements to perform surgical actuations in the explored region. Surgical elements of example may be tweezers, a scalpel, etc. remotely controlled by an operator (student, surgeon, etc.) of the endoscopic tool.

The endoscopic tube 218 may be rotatable around a longitudinal axis 216 of the tube 218, so that images of the explored region may be obtained, with the camera of the tip 219 of the tube 218, from different angles or perspectives.

The configuration described for the articulated arm, with diverse degrees of freedom, is just one example of how said arm could be articulated. The endoscopic tool 202 could therefore comprise other types of articulated arms with more or less degrees of freedom compared to those described in reference to Figure 2.

The endoscopic simulation device may further comprise a computing system 210 along with a data storage device 220 for storing data required for proper operation of the endoscopic simulation system. For example, the storage device 220 may comprise a database containing data of haptic responses, guiding in endoscopic simulations, theoretical training, and many other types of data.

The computing system 210 may be configured to execute one or more computer programs responsible for managing or controlling various functionalities associated with the endoscopic simulation device. These computer programs may be stored in the storage device 220 and may be loaded into a volatile memory (e.g. RAM) each time its execution is required. The management or control of the device may include, for example, collecting data from sensors and/or cameras, processing said data to generate data representative of the performed simulations, storage of images, sounds, etc. generated during endoscopic simulations, etc.

The endoscopic simulation device may further comprise a monitor or display 207 to display various types of images. These images may be images obtained by cameras located in the cavity 100 of the simulated organ, cameras arranged to record the performance of the user (operator, student, surgeon, etc.), etc. Besides the images about the endoscopic simulation in progress, images of an ideal execution of the endoscopy may also be displayed for guiding the user (operator, student, surgeon, etc.). These images of the ideal endoscopy may be displayed superimposed on the images of the endoscopy in progress for comparative purposes, for example.

The display 207 may be touch-type, as part of a user interface configured to make possible an appropriate communication and interaction between the student (or user, operator, etc.) and the endoscopic simulation device. Said user interface may comprise, for example, data input modules and output modules or modules for generating information.

The data input modules may be constituted by the said touch screen and, if required, a keyboard, a trackball or the like, and pedals for allowing access to or activation of certain functions, such as e.g. moving from one screen to another in a menu, accepting an option, etc. The inclusion of pedals as input module allows making the student familiar with the use of the pedals used in the operating room in a real situation.

The output modules may also include said touch screen and, if required, speakers (not shown). The speakers may allow the user interface to emit audio to provide the students with an aid during the execution of the exercises, and also to emulate the real conditions of an operating room playing recorded sounds during a real situation, etc. The output modules may also comprise the system of haptic responses commented in other parts of the description.

The endoscopic simulation device may allow performing exercises in tutorial mode, for example. The tutorial mode may provide the student with a series of aids so that the student may perform the exercises correctly. These aids may be provided during execution (or endoscopy simulation) time, even though instructions may also be provided prior to the execution of the simulated endoscopy.

As discussed in other parts of the description, different sensory channels may be used to transmit this aid information. For example, this support information may be transmitted through auditory channels, visual channels, and even force feedback channels. The tutorial mode may be applied as first stage in a training course, for example, in order to reduce the need for a "human" mentor.

Any of the examples described in the present disclosure may present, therefore, a high level of modularity and versatility. In particular, different modules used to simulate the (biological) part of the human body may be attachable to each other through a coupling system of easy execution. For example, the coupling system may be a snap system, so that a simple "click" may be sufficient to assemble the desired modules. These modules may be, therefore, easily interchangeable in order to simulate different organs with different morphologies, volumes, pathologies, etc. for performing different simulation exercises with large doses of realism.

The coupling between (main, inlet, simulation, etc.) modules may further comprise a universal connector to ensure the electrical connectivity between modules. This connectivity may allow that electrical power (from a power supply) may reach any electronic element (e.g. sensors) arranged in any module. The electrical connectivity may also permit proper transmission of data signals between electronic elements (e.g. sensors) arranged in any of the modules and a control unit (computing system, PC, etc.).

According to the aforementioned modular approach, in some endoscopic simulation devices of example, the control unit may be part of a base station. The base station may further comprise a display, speakers, a power supply, a casing, etc. The casing may be configured to house the modules modelling or simulating the (biological) part of the human body, such as for example: main module and inlet module of a physical model of a biological organ, physical model of an inlet path, etc.

The electronic elements that may be arranged in the modules modelling the (biological) part of the human body may comprise LEDs, extraction sensors, sensor-equipped meshes, etc. At least part of these electronic elements may be comprised in simulation modules that are easily attachable with the modules modelling the (biological) part of the human body. According to the purpose of providing a high level of modularity and versatility, said coupling may be, for example, a snap coupling (i.e. by "clicking").

In the case of simulation modules integrated in the main module, said modules may share at least some of the corresponding electronic elements. For example, said shared (or common) electronics may comprise a microprocessor configured to interact with the central control unit. This microprocessor may, for example, provide an identifier of the physical model of the biological organ so that the control unit may select control software that is compatible with such physical model in particular. Said selection of software may also be performed depending on an exercise of endoscopic operation selected by the user, for example.

Although only a number of particular embodiments and examples of the invention have been disclosed herein, it will be understood by those skilled in the art that other alternative embodiments and/or uses of the invention and obvious modifications and equivalents thereof are possible. The numerical signs relating to the drawings and placed between parentheses in a claim are only aimed at increasing the understanding of the claim and shall not be interpreted as limiting the scope of protection of the claim. The scope of the present invention should not be limited by particular embodiments, but should be determined only by the claims that follow.

Further, although the embodiments of the invention described with reference to the drawings comprise computing systems and methods performed by computing systems, the invention also extends to computer programs, particularly to computer programs on or in a carrier, adapted for putting the invention into practice. The program may be in the form of source code, object code, or an intermediate code between source code and object code, such as in partially compiled form, or in any other form suitable for use in the implementation of the processes according to the invention. The carrier may be any entity or device capable of carrying the program. For example, the carrier may comprise a storage medium, such as a ROM, for example a CD ROM or a semiconductor ROM, or a magnetic recording medium, for example a floppy disc or hard disk. Further, the carrier may be a transmissible carrier such as an electrical or optical signal, which may be conveyed via electrical or optical cable or by radio or other means.

When the program is embodied in a signal that may be conveyed directly by a cable or other device or means, the carrier may be constituted by such cable or other device or means.

Alternatively, the carrier may be an integrated circuit in which the program is embedded, the integrated circuit being adapted for performing, or for use in the performance of, the relevant processes.

Furthermore, the invention may also be implemented by computing systems such as personal computers, servers, a network of computers, laptops, tablets or any other programmable device or computer processor. Further or alternatively, programmable electronic devices may also be used, such as programmable logic controllers (ASICs, FPGAs, PLCs, etc.).

Therefore, the invention may be implemented both in hardware and in software or in firmware, or any combination thereof.

## Claims

1. Device for simulating an endoscopic operation via natural orifice, comprising
a physical model of a biological organ (100) comprising a main module (101) and an inlet module (102) detachable from each other, wherein the main module (101) defines a main body of the organ (103) with a cavity (104) and the inlet module (102) defines an inlet opening (105) to the cavity (104) of the main module (101) corresponding to the inlet of the biological organ; wherein
the inlet module (102) or the main module (101) is replaceable by another different inlet module or main module so as to simulate another different biological organ or with different morphology and/or pathology; wherein
the cavity (104) of the main module (101) is accessible through the inlet module (102) by an endoscopic tool (202) to actuate in the cavity (104) of the main module (101); and wherein
the main module (101) is configured in such a way that, in use, one or more simulation modules (106, 110, 112) are attachable with the main module (101) to simulate one or more events representative of the actuation of the endoscopic tool (202) in the cavity (104) of the main module (101).

2. Device according to claim 1, further comprising
the endoscopic tool (202) configured to access the cavity (104) of the main module (101) through the inlet module (102) and to actuate in the cavity (104) of the main module (101); and
the one or more simulation modules (106, 110, 112) attachable with the main module (101) and configured to simulate one or more events representative of the actuation of the endoscopic tool (202) in the cavity (104) of the main module (101).

3. Device according to any of claims 1 or 2, wherein the main module (101) of the physical model of the biological organ (100) comprises at least one coupling opening (107) configured in such a way that one of the simulation modules (106) is attachable with said coupling opening (107).

4. Device according to claim 3, wherein the coupling of the simulation module (106) with the coupling opening (107) is a snap coupling.

5. Device according to any of claims 1 to 4, further comprising a physical model of an access path to the physical model of the biological organ (100) from the outside, said physical model of the access path being detachable with respect to the physical model of the biological organ (100).

6. Device according to any of claims 1 to 5, wherein one of the simulation modules (110) comprises a physical model of a tumor configured in such a way that, in use, the physical model of the tumor (110) is removable by the endoscopic tool (202), and also comprises a sensor configured to detect removal of the tumor (110) by the endoscopic tool (202).

7. Device according to any of claims 1 to 6, wherein one of the simulation modules comprises a physical model of a biological organ tissue configured in such a way that, in use, the physical model of the biological tissue is removable by the endoscopic tool (202), and also comprises a sensor (111) configured to detect removal of the biological tissue by the endoscopic tool (202).

8. Device according to any of claims 1 to 7, wherein at least part of an inner surface (114) of the cavity (104) of the main module (101) of the physical model of the biological organ (100) is coated with a sensing layer configured to detect a pressure exerted by the endoscopic tool (202).

9. Device according to any of claims 1 to 8, wherein at least part of an inner surface (114) of the cavity (104) of the main module (101) of the physical model of the biological organ (100) is coated with a layer of soft material simulating one or more properties of a biological organ tissue.

10. Device according to any of claims 1 to 9, wherein the inlet module (102) of the physical model of the biological organ (100) is configured in such a way that, in use, the inlet module (102) provides a pivot point (117) for the endoscopic tool (202).

11. Device according to any of claims 1 to 10, wherein the inlet module (102) of the physical model of the biological organ (100) comprises a sensor for detecting the passage and/or the presence of the endoscopic tool (202) through the inlet opening (105) of the inlet module (102).

12. Device according to any of claims 1 to 11 comprising one or more sensors coupled to the endoscopic tool (202) configured to detect the position and/or orientation of the endoscopic tool (202).

13. Device according to any of claims 1 to 12, comprising one or more video recording devices configured to record the endoscopic tool (202) and/or a user of the endoscopic tool (202) during the simulation of the endoscopic operation.

14. Device according to any of claims 1 to 13, comprising one or more video recording devices configured to record an inside of the physical model of the biological organ (100) during the simulation of the endoscopic operation.

15. Device according to any of claims 1 to 14, comprising a haptic system coupled to the endoscopic tool (202) for transmitting haptic information to a user of the endoscopic tool (202) during the simulation of the endoscopic operation.

## Patentansprüche

1. Vorrichtung zur Simulation von einer endoskopischen Operation über eine natürliche Öffnung, umfassend
ein physisches Modell von einem biologischen Organ (100) umfassend ein Hauptmodul (101) und ein Einlassmodul (102), die voneinander entfernt werden können, wobei das Hauptmodul (101) einen Hauptkörper des Organs (103) mit einem Hohlraum (104) definiert und das Einlassmodul (102) eine Einlassöffnung (105) zum Hohlraum (104) des Hauptmoduls (101) entsprechend dem Einlass des biologischen Organs definiert; wobei
das Einlassmodul (102) oder das Hauptmodul (101) durch ein weiteres verschiedenes Einlassmodul oder Hauptmodul ersetzt werden kann, um ein weiteres verschiedenes biologisches Organ oder ein Organ verschiedener Morphologie und/oder Pathologie zu simulieren; wobei
der Hohlraum (104) des Hauptmoduls (101) durch das Einlassmodul (102) für ein endoskopisches Werkzeug (202) zugänglich ist, um in dem Hohlraum (104) des Hauptmoduls (101) betätigt zu werden; und wobei
das Hauptmodul (101) derart konfiguriert ist, dass ein oder mehrere Simulationsmodule (106, 110, 112) im Einsatz an dem Hauptmodul (101) angebracht werden können (101), um ein oder mehrere Ereignisse zu simulieren, die für die Betätigung des endoskopischen Werkzeugs (202) in dem Hohlraum (104) des Hauptmoduls repräsentativ sind.

2. Vorrichtung nach Anspruch 1 weiterhin umfassend
das endoskopische Werkzeug (202), das konfiguriert ist, um Zugang zum Hohlraum (104) des Hauptmoduls (101) durch das Einlassmodul (102) zu haben und in dem Hohlraum (104) des Hauptmoduls (101) betätigt zu werden; und
das eine oder die mehreren Simulationsmodule (106, 110, 112), die an dem Hauptmodul (101) angebracht werden können und die konfiguriert sind, um ein oder mehrere Ereignisse zu simulieren, die für die Betätigung des endoskopischen Werkzeugs (202) in dem Hohlraum (104) des Hauptmoduls repräsentativ sind.

3. Vorrichtung nach einem der Ansprüche 1 oder 2, wobei das Hauptmodul (101) des physischen Modells des biologischen Organs (100) mindestens eine Kupplungsöffnung (107) umfasst, die derart konfiguriert, dass eines von den Simulationsmodulen (106) an der Kupplungsöffnung (107) angebracht werden kann.

4. Vorrichtung nach Anspruch 3, wobei die Kupplung des Simulationsmoduls (106) an der Kupplungsöffnung (107) eine Schnappkupplung ist.

5. Vorrichtung nach einem der Ansprüche 1 bis 4, weiterhin umfassend ein physisches Modell von einem Zugangspfad zum physischen Modell des biologischen Organs (100) von außen, wobei das physische Modell des Zugangspfads bezüglich des physischen Modells des biologischen Organs (100) entfernt werden kann.

6. Vorrichtung nach einem der Ansprüche 1 bis 5, wobei eines von den Simulationsmodulen (110) ein physisches Modell von einem Tumor umfasst, das derart konfiguriert ist, dass das physische Modell des Tumors (110) im Einsatz mittels des endoskopischen Werkzeugs (202) entfernt werden kann, und es auch einen Sensor umfasst, der konfiguriert ist, um die Entfernung des Tumors (110) mittels des endoskopischen Werkzeugs (202) zu erkennen.

7. Vorrichtung nach einem der Ansprüche 1 bis 6, wobei eines von den Simulationsmodulen ein physisches Modell von einem biologischen Organgewebe umfasst, das derart konfiguriert ist, dass das physische Modell des biologischen Gewebes im Einsatz mittels des endoskopischen Werkzeugs (202) entfernt werden kann, und es auch einen Sensor (111) umfasst, der konfiguriert ist, um die Entfernung des biologischen Gewebes mittels des endoskopischen Werkzeugs (202) zu ermitteln.

8. Vorrichtung nach einem der Ansprüche 1 bis 7, wobei mindestens ein Teil von einer Innenfläche (114) des Hohlraums (104) des Hauptmoduls (101) des physischen Modells des biologischen Organs (100) mit einer fühlenden Schicht beschichtet ist, die konfiguriert ist, um einen durch das endoskopische Werkzeug (202) ausgeübten Druck zu ermitteln.

9. Vorrichtung nach einem der Ansprüche 1 bis 8, wobei mindestens ein Teil von einer Innenfläche (114) des Hohlraums (104) des Hauptmoduls (101) des physischen Modells des biologischen Organs (100) mit einer Schicht von einem weichen Material beschichtet ist, die eine oder mehr Eigenschaften von einem biologischen Organgewebe simuliert.

10. Vorrichtung nach einem der Ansprüche 1 bis 9, wobei das Einlassmodul (102) des physischen Modells des biologischen Organs (100) derart konfiguriert ist, dass das Einlassmodul (102) im Einsatz einen Drehpunkt (117) für das endoskopische Werkzeug (200) bietet.

11. Vorrichtung nach einem der Ansprüche 1 bis 10, wobei das Einlassmodul (102) des physischen Modells des biologischen Organs (100) einen Sensor zur Erkennung des Durchgangs und/oder der Anwesenheit des endoskopischen Werkzeugs (202) durch die Einlassöffnung (105) des Einlassmoduls (102) umfasst.

12. Vorrichtung nach einem der Ansprüche 1 bis 11 umfassend einen oder mehrere Sensoren, die an dem endoskopischen Werkzeug (202) gekoppelt sind, das konfiguriert sind, um die Position und/oder die Ausrichtung des endoskopischen Werkzeugs (202) zu erkennen.

13. Vorrichtung nach einem der Ansprüche 1 bis 12, umfassend eine oder mehrere Videoaufnahmevorrichtungen, die konfiguriert ist oder sind, um das endoskopische Werkzeug (202) und/oder einen Benutzer des endoskopischen Werkzeugs (202) während der Simulation der endoskopischen Operation aufzunehmen.

14. Vorrichtung nach einem der Ansprüche 1 bis 13, umfassend eine oder mehrere Videoaufnahmevorrichtungen, die konfiguriert ist oder sind, um einen Innenraum des physischen Modells des biologischen Organs (100) während der Simulation der endoskopischen Operation aufzunehmen.

15. Vorrichtung nach einem der Ansprüche 1 bis 14, umfassend ein haptisches System, das an dem endoskopischen Werkzeug (202) zur Übermittlung von haptischer Information an einen Benutzer des endoskopischen Werkzeugs (202) während der Simulation der endoskopischen Operation gekoppelt ist.

## Revendications

1. Dispositif pour la simulation d'une opération endoscopique par l'intermédiaire d'un orifice naturel, comprenant
un modèle physique d'un organe biologique (100) comprenant un module principal (101) et un module d'entrée (102), détachables l'un par rapport à l'autre, dans lequel le module principal (101) définit un corps principal de l'organe (103) avec une cavité (104) et le module d'entrée (102) définit une ouverture d'entrée (105) à la cavité (104) du module principal (101) correspondante à l'entrée de l'organe biologique ; dans lequel
le module d'entrée (102) ou le module principal (101) peut être remplacé par un autre module d'entrée ou module principal différent de manière à simuler un autre organe biologique différent ou ayant une morphologie et/ou pathologie différente ; dans lequel
la cavité (104) du module principal (101) est accessible à travers le module d'entrée (102) par un outil endoscopique (202) à être actionné dans la cavité (104) du module principal (101) ; et dans lequel
le module principal (101) est configuré de telle façon que, lors du fonctionnement, un ou plusieurs modules de simulation (106, 110, 112) peuvent être attachés au module principal (101) de manière à simuler un ou plusieurs événements représentatifs de l'actionnement de l'outil endoscopique (202) dans la cavité (104) du module principal (101).

2. Dispositif selon la revendication 1, comprenant en outre
l'outil endoscopique (202) configuré pour accéder à la cavité (104) du module principal (101) à travers le module d'entrée (102) et à être actionné dans la cavité (104) du module principal (101) ; et
l'un ou plusieurs modules de simulation (106, 110, 112) pouvant être attachés au module principal (101) et configurés de manière à simuler un ou plusieurs événements représentatifs de l'actionnement de l'outil endoscopique (202) dans la cavité (104) du module principal (101).

3. Dispositif selon l'une quelconque des revendications 1 ou 2, dans lequel le module principal (101) du modèle physique de l'organe biologique (100) comprend au moins une ouverture d'accouplement (107) configurée de façon qu'un des modules de simulation (106) peut être attaché à ladite ouverture d'accouplement (107).

4. Dispositif selon la revendication 3, dans lequel l'accouplement du module de simulation (106) à l'ouverture d'accouplement (107) est un accouplement à enclenchement.

5. Dispositif selon l'une quelconque des revendications 1 à 4, comprenant en outre un modèle physique d'un chemin d'accès au modèle physique de l'organe biologique (100) de l'extérieur, ledit modèle physique du chemin d'accès étant amovible par rapport au modèle physique de l'organe biologique (100).

6. Dispositif selon l'une quelconque des revendications 1 à 5, dans lequel un des modules de simulation (110) comprend un modèle physique d'une tumeur configuré de façon que, lors du fonctionnement, le modèle physique du tumeur (110) peut être enlevé par l'outil endoscopique (202), et comprend aussi un capteur configuré pour détecter l'enlèvement du tumeur (110) par l'outil endoscopique (202).

7. Dispositif selon l'une quelconque des revendications 1 à 6, dans lequel un des modules de simulation comprend un modèle physique d'un tissu d'organe biologique configuré de telle façon que, lors du fonctionnement, le modèle physique du tissu biologique peut être enlevé par l'outil endoscopique (202), et comprend aussi un capteur (111) configuré pour détecter l'enlèvement du tissu biologique par l'outil endoscopique (202).

8. Dispositif selon l'une quelconque des revendications 1 à 7, dans lequel au moins une partie d'une surface intérieure (114) de la cavité (104) du module principal (101) du modèle physique de l'organe biologique (100) est revêtue avec une couche de détection configurée pour détecter une pression exercée par l'outil endoscopique (202).

9. Dispositif selon l'une quelconque des revendications 1 à 8, dans lequel au moins une partie d'une surface intérieure (114) de la cavité (104) du module principal (101) du modèle physique de l'organe biologique (100) est revêtue avec une couche de matériau doux simulant une ou plusieurs propriétés d'un tissu d'organe biologique.

10. Dispositif selon l'une quelconque des revendications 1 à 9, dans lequel le module d'entrée (102) du modèle physique de l'organe biologique (100) est configuré de telle façon que, lors du fonctionnement, le module d'entrée (102) fournit un point de pivot (117) pour l'outil endoscopique (202).

11. Dispositif selon l'une quelconque des revendications 1 à 10, dans lequel le module d'entrée (102) du modèle physique de l'organe biologique (100) comprend un capteur pour détecter le passage et/ou la présence de l'outil endoscopique (202) à travers l'ouverture d'entrée (102) du module d'entrée (102).

12. Dispositif selon l'une quelconque des revendications 1 à 11 comprenant un ou plusieurs capteurs couplés à l'outil endoscopique (202) configurés pour détecter la position et/ou l'orientation de l'outil endoscopique (202).

13. Dispositif selon l'une quelconque des revendications 1 à 12, comprenant un ou plusieurs dispositifs d'enregistrement vidéo configurés pour enregistrer l'outil endoscopique (202) et/ou un utilisateur de l'outil endoscopique (202) pendant la simulation de l'opération endoscopique.

14. Dispositif selon l'une quelconque des revendications 1 à 13, comprenant un ou plusieurs dispositifs d'enregistrement vidéo configurés pour enregistrer un intérieur du modèle physique de l'organe biologique (100) pendant la simulation de l'opération endoscopique.

15. Dispositif selon l'une quelconque des revendications 1 à 14, comprenant un système haptique couplé à l'outil endoscopique (202) pour transmettre de l'information haptique à un utilisateur de l'outil endoscopique (202) pendant la simulation de l'opération endoscopique.
